# EUROPEAN PATENT APPLICATION

(11) **EP 0 836 933 A2**
(43) Date of publication of application: **22.04.1998**
(21) Application number: 97830526.6
(22) Date of filing: 20.10.1997
(51) Int. Cl.: B32B 17/10, C03C 27/12

(54) **Process for the automatic assembling of laminated glass and apparatus therefor**

(30) Priority: 21.10.1996 IT RM960712
(71) Applicant: TAI Tecnologia Automazione Innovazione S.p.a., 00040 Pomezia RM (IT)
(72) Inventor: Pimpinelli, Remo, 00152 Roma (IT); Cirillo, Francesco, 00152 Roma (IT); Chines, Giuseppe, 00197 Roma (IT)
(74) Representative: Bazzichelli, Alfredo

(57) **Abstract**

A process for the automatic assembling of laminated glass and an apparatus therefor, comprising the steps of: taking from a first conveyor (12;13) at least a pair of glass sheets placed thereon one next to each other by means of grabbing means (14;15) and movable means (1;2;3); approaching said at least a pair of glass sheets to a position detecting means (3;4;36); feeding and positioning at least one sheet of adhesive material (25) to an adhesive sheet positioning device (4;5;6;7;20;23); approaching each glass sheet of said at least a pair of glass sheets until they complete contact one to each other and with said sheet of adhesive material interposed therebetween, thus forming a laminated glass; and removing said laminated glass from said positioning device (4;5;6;7;20;23) and placing said laminated glass on a second conveyor (12;13).

## Description

The present invention relates to a process for the automatic assembling of laminated glass and, more precisely, to a process for the automatic assembling of laminated glass formed by two glass sheets interposed by a plastic sheet. Furthermore, the present invention provides an apparatus for the above mentioned process.

As it is well known, the laminated glass, also called safety glass, is to be used both in house building and in car industry. However, in any case, the final product is a laminated glass wherein the intermediate sheet, generally formed by plastic material, acts as adhesive for the two outer glass sheets, giving to the whole more strength and resistance to smashing in case of breaking.

In case of use in the car industry, the assembling step consists in superposing (overlapping) two curved glass sheets possibly casehardened and commonly called crystals, and interposing therebetween a sheet of transparent plastic material, usually a sheet of Polivinylbutyrral (PVB), having around half of the thickness of the crystals. Obviously, both the crystals and the plastic sheet shape varies according to the vehicle where they have to be mounted. In particular, when the crystals are to be the vehicle windshield or rear window, they are curved according to the vehicle outline.

The assembling step of said crystals and plastic sheet, is carried out manually by operators skilled in the art and on premises having controlled temperature, relative humidity and air purity.

Said assembling step is extremely delicate and difficult because of the risk of breaking and faults brought about by such a step being carried out manually on such products.

A first problem is that the crystals are extremely fragile and can undergo crashing, dices, scaling etc, because of their low mechanical characteristics, in particular for those not casehardened or with small thickness.

Another problem is that of being sure that the connecting surfaces have no member that can compromise their optical quality intended as transparency and absence of distortions. Thus, traces of dirt, grease, dust as well as scratches, tearing, possible residual waves or laps of the plastic sheet are to be avoided. Therefore, this is a problem for the operator who has to carry out the entire operation manually, and therefore he has to be extremely skilled.

A further problem is that the whole assembling step, being carried out manually, requires assembling times that do not match well with costs of large scale productions.

Another problem is that the coupling of the crystals have a positioning tolerance of 0.5 mm or less throughout their edges. Therefore, the operator must "feel" the position of the edge of the two crystals manually, using his fingertips which are usually covered with gloves both for safety reasons and not to compromise the cleanness of the glass surfaces.

Furthermore, tactile sensitivity in such condition is further reduced by the presence of the intermediate plastic sheet that, facing from the glass sheet and overlapping the edge of one of the two crystals, adds its thickness to that of the crystalline wrapped by the first. This requires that the specialist carries out some sort of tactile operation of extrapolation, whose result is often uncertain.

Therefore, an object of the present invention is to provide a process for the automatic assembling of laminated glass which overcomes the above shown problems, rendering furthermore the above mentioned glass assembling faster, more precise, and with a very low number of aberrations and faults in the product hereby obtained, and being extremely cost-saving as far as manpower and thus reducing the cost of the finished products.

Furthermore, the present invention provides an apparatus for a process for the automatic assembling of laminated glass which solves the above mentioned problems related to precision and delicacy of the coupling, of speed of production, of final quality of the manufactured product and, last but not least, of safety for the operators.

Therefore, according to the present invention, a process for the automatic assembling of laminated glass is provided, characterized in that it comprises the following steps:
- taking from a first conveyor at least a pair of glass sheets placed thereon one next to each other by means of grabbing means and movable means, positioning a first glass sheet of said at least a pair of glass sheets above and spaced away from the other glass sheet;
- approaching said at least a pair of glass sheets to a position detecting means;
- adjusting the position of each glass sheet with respect to a reference point after that a signal coming from said detecting means is sent and in such a way as to re-adjust the position of said glass sheets in a perfectly coincident but spaced manner;
- feeding and positioning at least one sheet of adhesive material to an adhesive sheet positioning device;
- approaching said at least a pair of glass sheets to said sheet positioning device so as to interpose said at least one adhesive sheet between said at least a pair of glass sheets;
- approaching each glass sheet of said at least a pair of glass sheets until they complete contact one to each other and with said sheet of adhesive material interposed therebetween, thus forming a laminated glass; and
- removing said laminated glass from said positioning device and placing said laminated glass on a second conveyor.

Furthermore, the present invention discloses an apparatus for the assembling of laminated glass characterized in that it comprises:
- grabbing means for at least a pair of glass sheets;
- movable means for said at least a pair of glass sheets;
- positioning means for said at least a pair of glass sheets, and connected to said movable means;
- first position detecting means of said at least a pair of glass sheets, and connected with said movable means;
- feeding and positioning means for at least a sheet of adhesive material; and
- second position detecting means of said at least a pair of glass sheets with respect to said feeding and positioning means for a sheet of adhesive material.

The present invention will be shown herebelow according to an embodiment thereof, given as a nonlimiting example. Reference will be made to the annexed drawings, wherein :
figure 1 is a top plan schematic view of the apparatus for the assembling of laminated glass, according to the present invention;
figure 2 is a side view of the apparatus of figure 1;
figure 3 is a partial top plan view of the plastic sheet feeding and positioning device of the apparatus of figure 1;
figure 4 is a elevational front view of the sheets position detecting device of the apparatus of figure 1;
figure 5 is a cross partial side view of the glass sheets grabbing and moving devices of the apparatus in figure 1; and
figure 6 is a partial rear view of the device of figure 4.

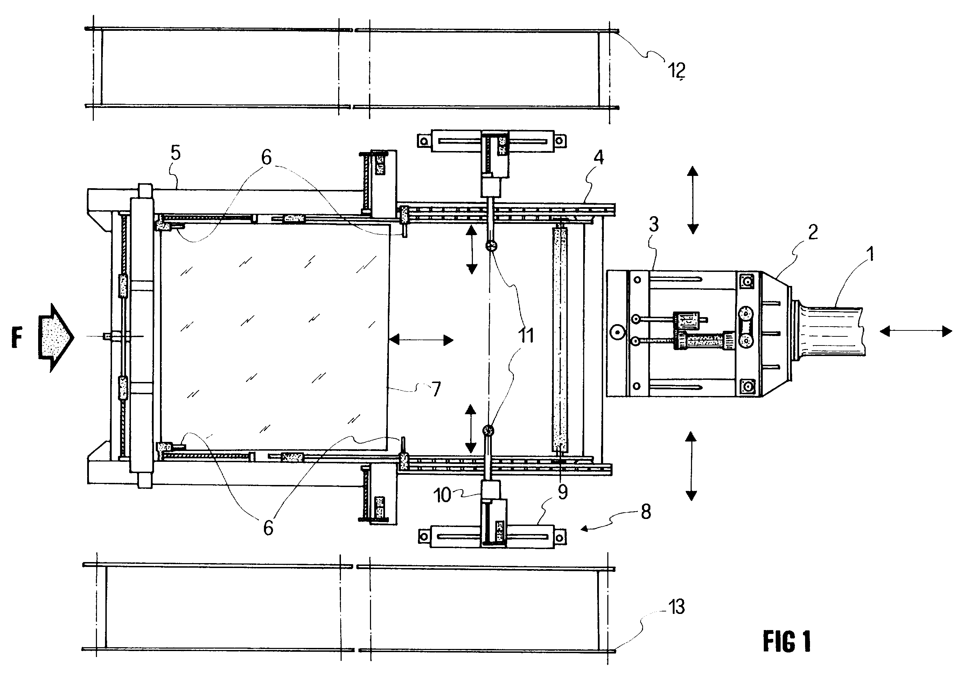

With reference to figure 1, it is a top plan view of the apparatus for the assembling of laminated glass.

According to the present invention, the apparatus comprises a mechanical arm of an industrial robot 1 (partially shown in the figure), for example of the six-axis kind and easily available on the market, which is made integral with a frame 2 in a manner known in the art. The frame 2 has two pairs of arms 3 (only one of which is shown in the figure). The lower pair of arms 3 are fixedly mounted on the frame 2 while the upper pair of arms 3 are slidably connected to the frame 2 by means of a movable device (better shown herebelow). Furthermore, on each pair of arms 3, glass sheets grabbing and moving devices are placed (better shown herebelow).

In front of the frame 2, a plastic sheet feeding and positioning device is placed. Said device has a first frame 4 on top of which a second frame 5 is slidably mounted. The second frame 5 has two front grabbing members 6 and two rear grabbing members 6a for grabbing the plastic sheet, which can be fed in the direction of the arrow F as shown in the figure. Said grabbing members 6 and 6a, are tongs shaped and substantially mounted on the edges of the frame 5, respectively. Furthermore, each grabbing member 6 and 6a is slidably mounted on the second frame 5 as to slide with respect to the latter by means of a respective movable devices (better shown herebelow).

At the inner part of said frame 4, is arranged a flat movable member 7 to support the fed sheet (better shown herebelow).

On each side to the frame 4, two sheets' position detecting devices 8 are placed. Each device 8 has a fixed frame 9 wherein two arms 10 are slidably mounted, each one having an abutment 11 (only one of which is shown in the figure, and better described herebelow), apted to lay on the sheets coming from the arms 3. Each abutment 11 is integral with a position detector such as, for instance, an optical group in a manner known in the art.

Furthermore, conveyors belts 12 and 13 for feeding the glass sheets to the grabbing device of the apparatus and to convey the assembled sheets to the further step, can be provided on both sides of the frame 4.

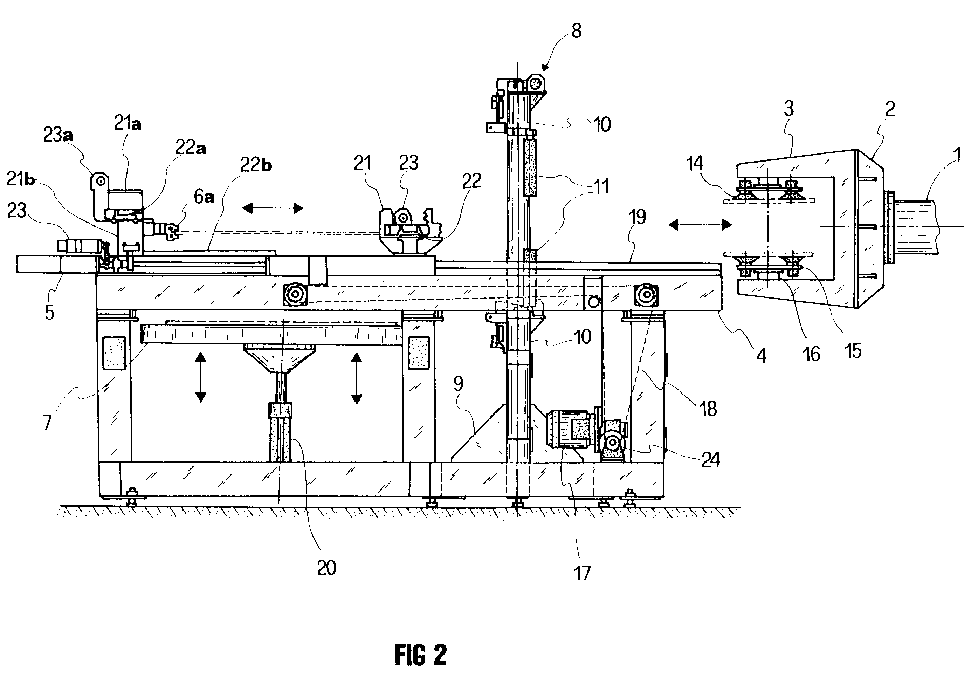

Reference it is now made to figure 2, wherein a side view of the apparatus according to the present invention is shown.

As it can be seen, the arms 3 have a plurality of suction members 14 (only four of which are shown in the figure and better described herebelow) each one of which is integrally mounted on a supporting member 15. Furthermore, each suction member 14 is connected to a suction pipe (which is not shown) to provide the negative pressure needed to grab the sheet when it gets in contact with the suction member 14. Furthermore, the suction pipe, final to the assembling of the glass sheets, can provide a positive pressure through a pressure source, to allow the detachment of each sheet from the suction member 14,-to which it adheres.

Each supporting member 15 is integral with a movable hub 16. Each hub 16 is freely rotatable on the respective arm 3 through a plurality of movable devices placed thereto (better described herebelow).

Further, the frame 4 has a driving unit 17 coupled to a drive belt 18 to carry out the movement of the frame 5 on said frame 4, said frame 5 being connected to said drive belt 18 to slide on the frame 4 through sliding guides 19 placed thereto(better shown herebelow).

Furthermore, the supporting flat member 7 is connected to a pneumatic actuator 20 in a manner known in the art, to allow the plastic sheet placed thereto to be grabbed by the tongs members 6.

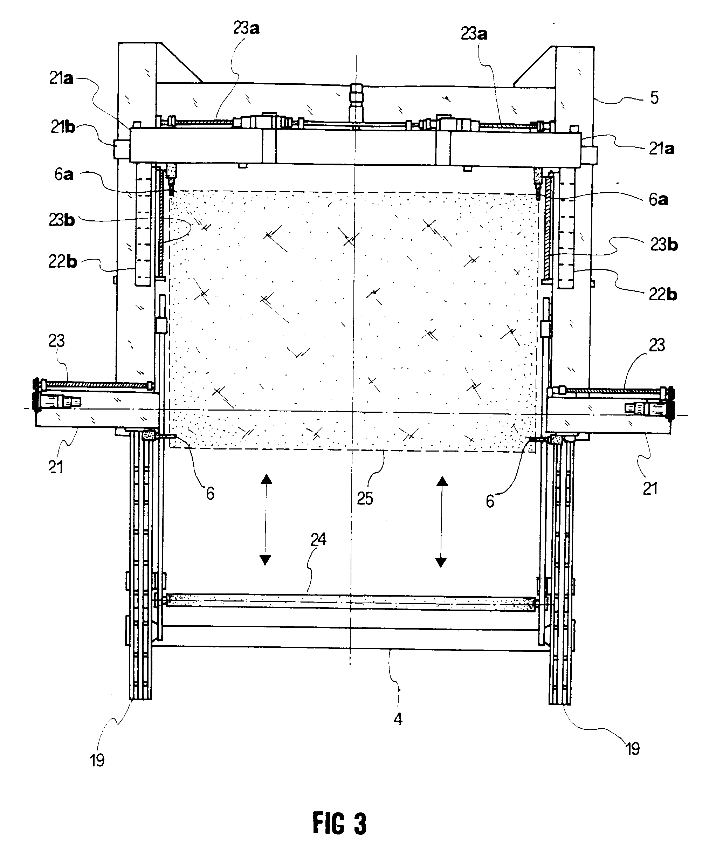

With reference to figure 3, a partial top plan view of the plastic sheet feeding and positioning device is shown.

As it can be seen, the frame 5 can slide on the frame 4 through a pair of guides 19, positioned at the top thereof and on each side edge of the frame 4. Furthermore, each grabbing member 6 is integral with a respective supporting member 21, and each one of them is apt to slide perpendicularly to the sliding direction of said frame 5 on respective guides 22 (not shown in the figure and better described in figure 2), the guides 22 being integral with the frame 5 and the frame 5 being movable by ball screw devices 23.

On the other hand, each one of the two grabbing members 6a is integral with a supporting member 21a. Each supporting member 21a slides perpendicularly to the sliding direction of the frame 5 on a single supporting member 21b, on respective guides 22a (not shown in the figure and better described in figure 2) and by means of respective ball screw devices 23a, the two guides 22a and the two devices 23a being integral with the supporting member 21b in a manner known in the art.

On the other hand, the supporting member 21b can slide on the frame 5 in the same sliding direction of the latter through a pair of guides 22b and a pair of ball screw devices 23b, and is integral to the frame 5 and to the supporting member 21b in a manner known in the art.

For the transmission of the movement on both sides of the frame 5, a rotatable rigid member 24 connected to the driving unit 17 (not shown in the figure) is provided.

Furthermore, in the figure it is shown the position assumed by a generic plastic sheet 25 when it is grabbed by the grabbing members 6.

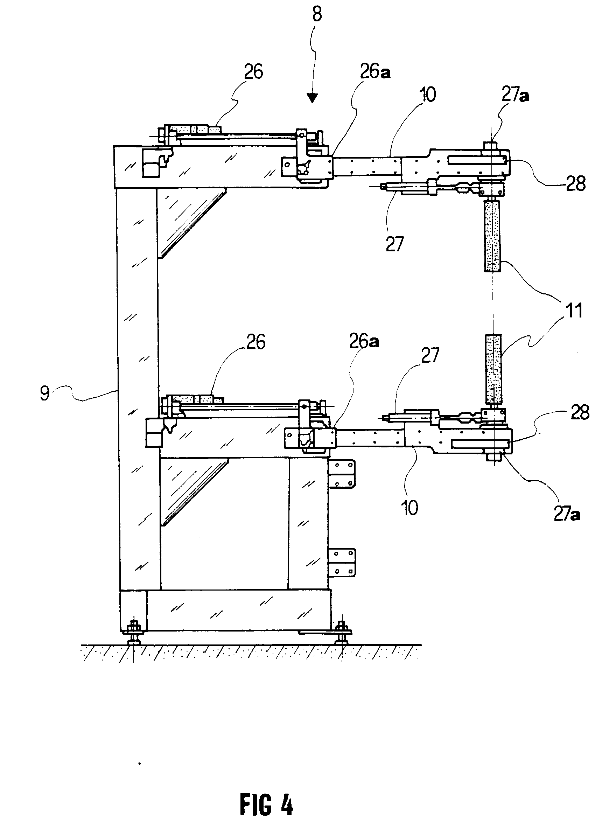

With reference to figure 4, it shows a front top view of the glass sheet position detecting device.

As it can be seen, the arms 10 are apt to slide on said frame 9 through respective ball screw devices 26 and guides 26a in a manner known in the art. Furthermore, each abutment 11 is rotatable around its own axis and slidable on the respective arm 10 by means of a pneumatic device 27 and respective guide 27a, in a manner known in the art.

Further, at each abutment 11 an optical positioning detector 28 is arranged to detect the position of the abutment 11 with respect to the frame 4.

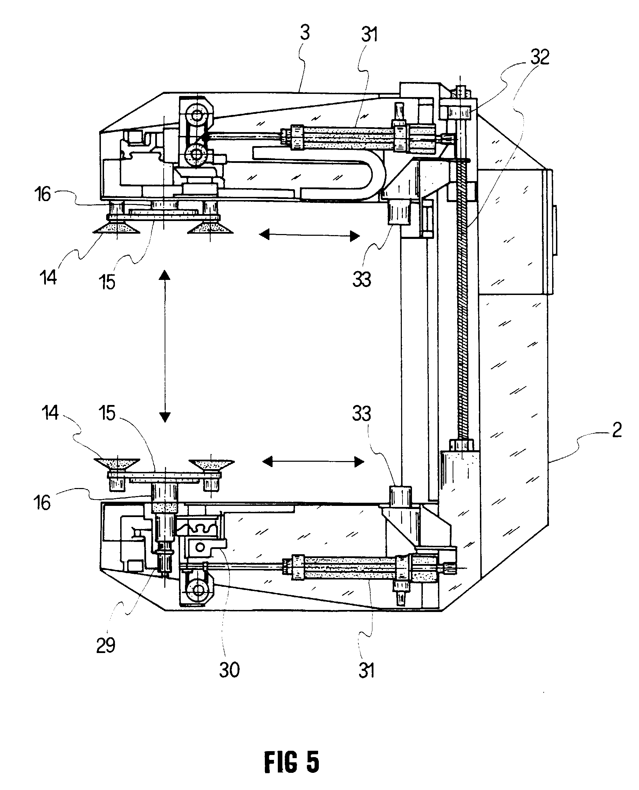

With reference to figure 5, a cross partial side view of the grabbing and moving devices of the glass sheets is shown.

As it can be better seen, the movable hub 16 is freely rotatably connected to a support 29 for the rotation thereof with respect to the arm 3. On the other hand, the support 29 is connected to a ball screw device 30 so that the hub 16 can slide transversally to the longitudinal direction of the arm 3. The support 29 and the device 30 are integral with a hydraulic actuator 31 to slide along the longitudinal direction of the arm 3. Furthermore, a locking brake in the support 29 and a brake in the actuator 31 are provided (not shown in the figure) in order to keep the hub 16 in its position.

The upper pair of arms 3 is apt to slide on the frame 2 by means of guides (not shown in the figure) positioned on the frame 2, in a manner known in the art and through a ball screw electrical device 32 to which said pair of arms 3 is slidably connected.

At the slidably connection portion of each arm 3 with said frame 2, four abutments 33 (only two of which are shown in the figure) are rotatably connected to the respective arm 3. Each abutment 33 is telescopic and can extend to provide the abutment and reference point when it is in rotating contact with a respective edge of the glass sheets, and successively partially retire during the coupling of the glass sheets with the plastic sheets in order to avoid any possible interference with them.

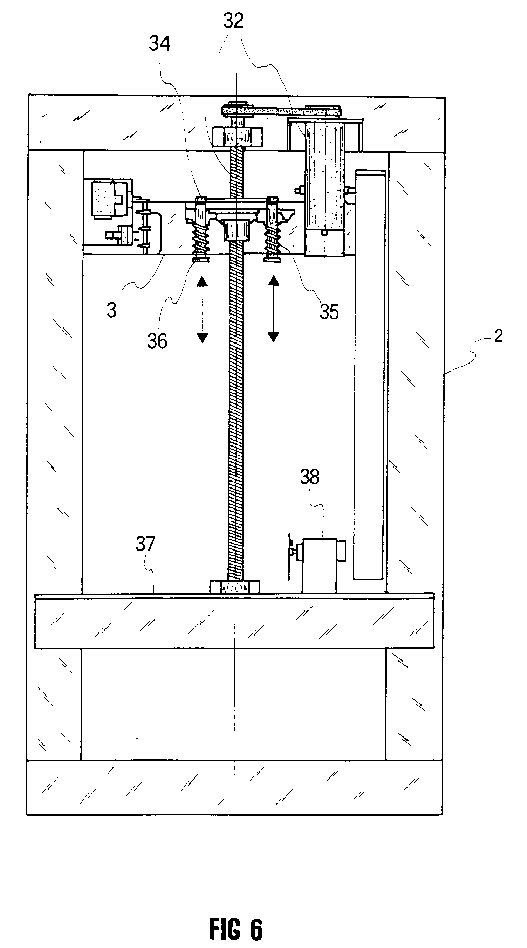

Reference is now made to figure 6, which shows a partial rear view of the glass sheets grabbing and moving devices.

As it is better shown, the upper pair of arms 3 at its rear portion is integrally connected to a glass sheets position detecting device. The device comprises a pair of cylinders 34, each one of them having a spring 35 coaxially mounted thereto and having an abutment 36 on its free end that, after the upper pair of arms 3 approaches to the lower pair of arms 3, it strikes a reference surface 37 of the frame 2, providing a position signal.

Further, a safety device 38 is provided, which is apt to stop the power supply to the device 32 when said upper pair of arms reaches a predetermined position.

It is necessary to point out that all the operations of the apparatus according to the invention and the related signals provided by the above mentioned position detecting devices and other devices previously shown, are carried out by a main control unit connected to them in a manner known in the art (not shown in the figure). Therefore, for an easier description, the detailed description of the aforesaid connections and of said control unit will be omitted, as they are already disclosed in the art.

During operation, at first the mechanical arm 1 takes a pair of glass sheets from the conveyor belt 12 by means of the suction members 14. Then, the arm 1 takes its position in front of the frame 4 wherein it was previously fed and positioned a plastic sheet 25. Successively, when the arm 1 advances, the glass sheets get in contact with the abutments 11, which send a position signal to the control unit. The control unit, at its turn, sends a signal to the moving devices 30 and 31 on each pair of arms 3 until the centering of the glass sheets is reached.

Therefore, the glass sheets are kept in their position by the locking brakes placed on each moving device 30 and 31.

Once the sheets are centered, the abutments 11 retire through the arms 10, and the frame 5 advances until it reaches a predetermined position to bring the plastic sheet between the two spaced glass sheets. After that, the upper glass sheet, i.e. the upper pair of arms 3, approach the lower pair of arms 3, through the device 32 until contacting the lower glass sheet thus interposing the plastic sheet between the two glass sheets. Just before the two sheets get in contact, they slide forward synchronically through the devices 31 and the abutments 33 retire so as to avoid any interference with the glass sheets and the plastic sheet interposed therebetween.

As the two glass sheets are in mutual contact, the abutments 36 touch the reference surface 37 and send the position signal to the control unit. After that, the position signal is sent, the control unit stops the power supply to the device 32 and therefore only the pressure needed to keep the sheets together by means of the bias of the springs 35 is used.

Then, the mechanical arm 1 retires from the frame 4 and put the so assembled laminated glass on the conveyor 13 to address it to the successive treatment.

To those skilled in the art, it will be evident that the apparatus of the present invention can have several embodiments or modifications without changing its original object or departing from the scope of the annexed claims.

For example, the hub 16 for the support of the suction members 14 rather than being freely rotatable on the arms 3, could be connected to said arms by means of an electrical engine to control its rotation through said control unit.

## Claims

1. Process for the automatic assembling of laminated glass characterized in that it comprises the following steps :
- taking from a first conveyor (12;13) at least a pair of glass sheets placed thereon one next to each other by means of grabbing means (14;15) and movable means (1;2;3), positioning a first glass sheet of said at least a pair of glass sheets above and spaced away from the other glass sheet;
- approaching said at least a pair of glass sheets to a position detecting means (3;4;36);
- adjusting the position of each glass sheet with respect to a reference point after that a signal coming from said detecting means (3;4;36) is sent and in such a way as to re-adjust the position of said glass sheets in a perfectly coincident but spaced manner;
- feeding and positioning at least one sheet of adhesive material (25) to an adhesive sheet positioning device (4;5;6;7;20;23);
- approaching said at least a pair of glass sheets to said sheet positioning device (4;5;6;7;20;23) so as to interpose said at least one adhesive sheet between said at least a pair of glass sheets;
- approaching each glass sheet of said at least a pair of glass sheets until they complete contact one to each other and with said sheet of adhesive material interposed therebetween, thus forming a laminated glass; and
- removing said laminated glass from said positioning device (4;5;6;7;20;23) and placing said laminated glass on a second conveyor (12;13).

2. Apparatus for the assembling of laminated glass characterized in that it comprises:
- grabbing means (14;15) for at least a pair of glass sheets;
- movable means (1;2;3) for said at least a pair of glass sheets;
- positioning means (15;16;30;31;32) for said at least a pair of glass sheets, and connected to said movable means (1;2;3);
- first position detecting means (34;36) of said at least a pair of glass sheets, and connected with said movable means (1;2;3);
- feeding and positioning means (4;5;6;7;20;23) for at least a sheet of adhesive material (25); and
- second position detecting means (9;10;11;28;26;27) of said at least a pair of glass sheets with respect to said feeding and positioning means (4;5;6;7;20;23) for a sheet of adhesive material.

3. Apparatus according to claim 2, wherein said grabbing means comprises:
- a plurality of suction members (14);
- a plurality of members (15) to support said suction members;
- a plurality of suction pipes and valves connected to said plurality of suction members (14); and
- a source of an air negative/positive pressure pneumatically connected to said suction pipes.

4. Apparatus according to claim 2 or 3, wherein said movable means for said at least a pair of glass sheets comprise:
- a mechanical movable arm (1);
- a movable frame (2) integral with said mechanical arm; and
- at least a pair of arms (3) connected to said frame (2) and at least one of those being slidably connected with said movable frame (2).

5. Apparatus according to any of the claims from 2 to 4, wherein said positioning means for said at least a pair of glass sheets comprises:
- at least a movable member (16) placed on each arm of said at least a pair of arms (3) for these said members being rotatably connected to said supporting members (15) with each arm (3);
- a first actuator mean (30) placed on each arm (3) and connected with said movable member (16) to make said member (16) slidable transversally to said movable arm (3) to which it is connected;
- a second actuator mean (31) placed on each movable arm (3) and connected with said means (30) to make said member (16) slidable transversally to said movable arm (3) to which it is connected; and
- a third actuator mean (32) placed on the frame (2) for the reciprocal spacing and approaching of said movable arms (3).

6. Apparatus according to the previous claim 5, wherein each mean of said first, second and third actuator comprises at least one of the following devices:
- electrical engine;
- pneumatic actuator;
- hydraulic actuator;
- rack device;
- ball screw device.

7. Apparatus according to any of the claims from 2 to 6, wherein said first position detecting means comprises at least a pair of position detector (34, 36) placed on said at least a pair of movable arms (3).

8. Apparatus according to any of the claims from 2 to 7, wherein said feeding and positioning means for a sheet of adhesive material comprise:
- a first frame (4);
- a second frame (5) slidably placed on said first frame (4);
- a plurality of grabbing members (6,6a) for the said sheet;
- a plurality of sliding devices (23, 23a, 23b) for the said plurality of grabbing members (6,6a) placed on said second frame (5) and connected with them;
- a sheet supporting flat member (7) movable with respect to said first frame (4); and
- movable means (20) of said sheet supporting flat member (7).

9. Apparatus according to the previous claim wherein said movable means (20) of said movable supporting flat member (7) comprises at least one of the following devices:
- electrical engine;
- pneumatic actuator;
- hydraulic actuator;
- rack device;
- ball screw device.

10. Apparatus according to claim 8, wherein said grabbing members (6,6a) are formed substantially by tongs members and wherein each sliding device of said plurality of sliding devices (23,23a,23b) comprises:
- one supporting member (21,21a,21b) of said grabbing member (6,6a);
- a sliding guide (22,22a,22b) of said supporting member (21,21a,21b); and
- at least one actuator among the following group of actuators :
- electrical engine;
- pneumatic actuator;
- hydraulic actuator;
- rack device;
- ball screw device.

11. Apparatus according to any of the claims from 2 to 10, wherein said second position detecting means of said at least a pair of sheets comprise:
- a frame (9);
- at least a pair of arms (10) extendible on said frame (9);
- first movable means (26) for the movement of said at least a pair of arms (10) relatively to said frame (9) and integral with it;
- at least a sheet position detector (11,28) mounted on each arm of said at least a pair of extendible arms (10); and
- second movable means (27) for the movement of said at least a position detector (11,28) relatively to the respective arm (10) integrally mounted on it.

12. Apparatus according to the previous claim 11, wherein said first movable means (26) and said second movable means (27) comprise at least one of the following devices:
- electrical engine;
- pneumatic actuator;
- hydraulic actuator;
- rack device;
- ball screw device.

13. Apparatus according to any of the claims from 2 to 12, wherein said sheet of adhesive material is substantially made from at least one of the following materials:
- Polivinylbutyrral (PVB);
- A composition of synthetic resins with carbon fibers;
- Metal;
- A composition of synthetic resins with metallic material.
